# EUROPÄISCHE PATENTSCHRIFT

(11) **EP 2 058 084 B1**
(45) Veröffentlichungstag und Bekanntmachung des Hinweises auf die Patenterteilung: **06.10.2010**
(21) Anmeldenummer: 07021706.2
(22) Anmeldetag: 08.11.2007
(51) Int. Cl.: B23Q 1/76

(54) **Lünette**
Stationary support
Lunette

(43) Veröffentlichungstag der Anmeldung: 13.05.2009
(73) Patentinhaber: Schunk GmbH & Co. KG Spann- und Greiftechnik, 74348 Lauffen am Neckar (DE)
(72) Erfinder: Damang, Markus, 72459 Albstadt (DE)
(74) Vertreter: Paul, Dieter-Alfred

(56) Entgegenhaltungen:
- EP-A- 0 562 180
- DE-A1- 3 543 806
- DE-A1- 3 719 103
- DE-A1- 19 950 706

## Beschreibung

Die vorliegende Erfindung betrifft eine Lünette zum Aufspannen und/oder zur Halterung eines Werkstückes an einer Werkzeugmaschine mit drei in einem Gehäuse gelagerten und in einer gemeinsamen Ebene verstellbaren Haltegliedern, von denen die beiden äußeren Halteglieder als spiegelbildlich zueinander angeordnete und schwenkbar in dem Gehäuse abgestützte zweiarmige Hebel ausgebildet sind und das mittlere Halteglied geradlinig und radial zu einer Werkzeugachse verschiebbar geführt ist, wobei das mittlere Halteglied Steuerflächen aufweist, welche mit den freien Enden der äußeren Halteglieder zusammen wirken, um eine zum Werkzeug gerichtete Schließbewegung des mittleren Halteglieds in eine Schwenkbewegung der äußeren Halteglieder in deren Spannstellung umzusetzen, und wobei die beiden äußeren Halteglieder mit dem mittleren Halteglied jeweils über einen Winkelhebel derart kinematisch verbunden sind, dass die äußeren Halteglieder bei einer vom Werkstück weg gerichteten Öffnungsbewegung des mittleren Haltegliedes in ihre geöffnete Stellung auseinander geschwenkt werden.

Lünetten dieser Art zum Aufspannen und/oder zur Halterung von werkstücken an Werkzeugmaschinen und insbesondere Drehmaschinen sind beispielsweise aus der EP 0 562 180 B1 bekannt. Bei diesen Lünetten sind die als Winkelhebel ausgebildeten äußeren Halteglieder am Gehäuse schwenkbar gelagert, wobei ihre freien inneren Enden an Steuerflächen des mittleren Halteglieds anliegen und mit diesen zusammenwirken, so dass eine axiale Spannbewegung des mittleren Halteglieds in eine schwenkende Schließ- oder Spannbewegung der äußeren Halteglieder umgesetzt wird. Des weiteren ist die vorbekannte Lünette mit einer Rückführfunktion ausgestattet, welche dafür sorgt, dass die inneren Enden der äußeren Halteglieder in Anlage an den Steuerflächen bleiben und somit automatisch in ihre geöffnete Stellung zurückgebracht werden, wenn das mittlere Halteglied axial von dem Werkzeug wegbewegt wird. Hierzu ist jedem äußeren Halteglied ein ebenfalls als winkelhebel ausgebildeter Steuerhebel zugeordnet, der an seinem einen Ende einen Zapfen trägt, welcher in einer geradlinigen Kulisse in dem inneren Hebel des äußeren Halteglieds geführt ist. Das andere Ende des Steuerhebels ist in einem Eckbereich des Gehäuses schwenkbar gelagert, und in dem mittleren Bereich des Steuerhebels ist eine Ausnehmung vorgesehen, in welcher ein am mittleren Halteglied gehaltener Zapfen geführt ist. Diese Art der Kopplung der äußeren Halteglieder mit dem mittleren Halteglied über den Steuerhebel führt dazu, dass der Steuerhebel durch den Kontakt zwischen der Ausnehmung und dem Zapfen eine zwangsgesteuerte Schwenkbewegung ausführt, durch welche die äußeren Halteglieder in ihre geöffnete Stellung aufgeschwenkt werden, wenn das mittlere Halteglied zurückgezogen wird.

Die bekannten Lünetten haben sich in der Praxis zwar durchaus bewährt. Es besteht jedoch ein Bedarf, die Rückführung noch einfacher zu gestalten und insbesondere die Führungswege zu verkürzen.

Entsprechend ist es eine Aufgabe der vorliegenden Erfindung, eine Lünette der eingangs genannten Art so auszugestalten, dass die Führungswege verkürzt werden und die Ausgestaltung einfach ist. Dabei soll eines der Halteglieder über die der Öffnungsstellung der Lünette entsprechende Stellung hinaus bewegbar sein, um die Öffnung für das Einsetzen bzw. Entnehmen eines Werkstücks zu vergrößern.

Diese Aufgabe ist erfindungsgemäß bei einer Lünette der eingangs genannten Art dadurch gelöst, dass die Winkelhebel an dem mittleren Halteglied drehbar angelenkt sind und jeweils der eine Schenkel der Winkelhebel mit dem zugehörigen äußeren Halteglied und der andere Schenkel mit dem Gehäuse über Kulissen-Zapfen-Anordnungen verbunden sind.

Erfindungsgemäß ist somit vorgesehen, dass die Winkelhebel, über welche die äußeren Halteglieder mit dem mittleren Halteglied gekoppelt sind, am mittleren Halteglied und hier insbesondere benachbart zu dessen Steuerflächen schwenkbar gelagert ist und die freien Enden des winkelhebels mit dem Gehäuse bzw. den äußeren Haltegliedern über Kulissen-Zapfen-Anordnungen verbunden sind. Hierdurch wird erreicht, dass die Übertragungswege aufgrund der kurzen Hebelarme zwischen dem Anlenkpunkt am mittleren Halteglied einerseits und den Kulissen andererseits kurz sind, wodurch eine direkte Übertragung der Bewegung erreicht und damit auch die Führung erleichtert wird.

Gemäß einer bevorzugten Ausführungsform ist dabei vorgesehen, dass die Winkelhebel jeweils am Schnittpunkt ihrer beiden Schenkel an dem mittleren Halteglied drehbar angelenkt sind.

In weiterer Ausgestaltung der Erfindung kann vorgesehen sein, dass an den inneren Hebelarmen der äußeren Halteglieder jeweils eine insbesondere geradlinige Kulisse vorgesehen ist, in welcher ein Zapfen am Ende des einen Schenkels des zugehörigen Winkelhebels verschiebbar geführt ist. Eine solche einfache Kulissen-Zapfen-Führung ist ausreichend, um die geradlinige Bewegung des mittleren Halteglieds in eine entsprechende Schwenkbewegung der äußeren Halteglieder umzusetzen.

Demgegenüber ist es in den meisten Fällen erforderlich, dass die Kulissen der Kulissen-Zapfen-Anordnungen zwischen Gehäuse und Winkelhebel kurvenförmig verlaufen. Zweckmäßigerweise ist dabei die kurvenförmige Kulisse in dem mit dem Gehäuse in Eingriff stehenden Schenkel der Winkelhebel ausgebildet, und greift in die Kulisse ein am Gehäuse vorgesehener Zapfen ein. Die Ausbildung der Kulisse an dem Winkelhebel hat den Vorteil, dass die Kulisse auf einfache Weise hergestellt werden kann. In kinematischer Umkehr ist selbstverständlich auch eine Anordnung denkbar, bei welcher die Kulisse in dem Gehäuse ausgebildet und der Zapfen an dem Winkelhebel gehalten ist.

Um eine möglichst direkte Führung zu erhalten, sollte der am Gehäuse gehaltene Zapfen nahe.der Bewegungsachse des mittleren Halteglieds am Gehäuse vorgesehen sein, wobei dann der Zapfen in der geschlossenen Stellung der Lünette mit dem am freien Ende des winkelhebels gelegenen Ende der kurvenförmigen Kulisse in Eingriff stehen sollte.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt
- Figur 1: eine Lünette gemäß der vorliegenden Erfindung in ihrer Spannstellung,
- Figur 2: die Lünette aus Figur 1 in ihrer geöffneten Stellung und

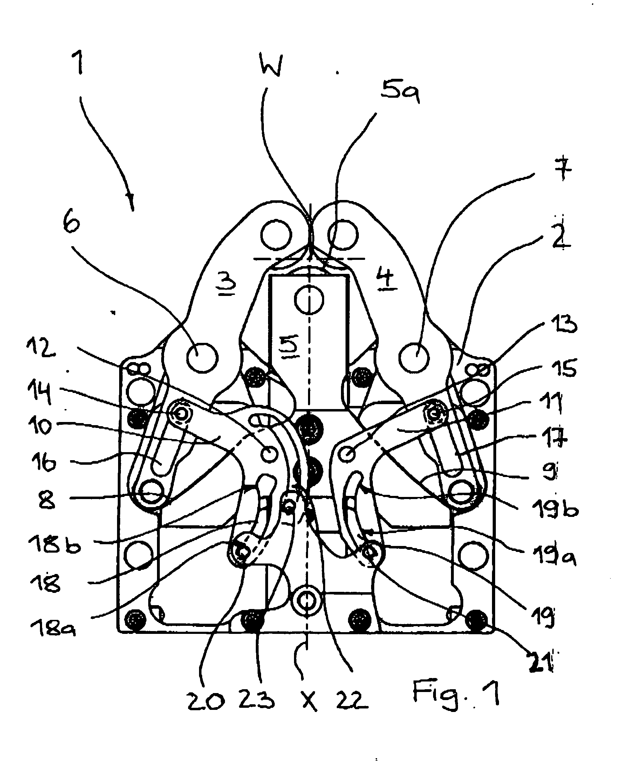

In den Figuren 1 bis 3 ist eine Lünette 1 dargestellt, die zum Aufspannen und/oder zur Halterung eines Werkstükkes W an einer Werkzeugmaschine und hier insbesondere einer Drehmaschine dient. Die Lünette 1 besitzt ein Gehäuse 2, in welchem drei in einer gemeinsamen Ebene verstellbare Halteglieder 3, 4, 5 gelagert sind. Dabei sind die beiden äußeren Halteglieder 3 und 4 als Winkelhebel ausgebildet, die in ihrem mittleren Bereich über Gelenkzapfen 6, 7 schwenkbar in dem Gehäuse 2 gelagert sind. Das mittlere Halteglied 5 ist mittig zwischen den beiden äußeren Haltegliedern 3, 4 angeordnet und radial zu dem Werkstück W verstellbar geführt. Von dem Werkstück W ist in der Zeichnung nur die Spannposition dargestellt, welche sich unabhängig von der Größe des zu spannenden Werkstücks nicht ändert. Die Verstellung erfolgt über einen nicht näher dargestellten Stellmechanismus.

Das mittlere Halteglied 5 weist an seiner zum Werkzeug weisenden Stirnfläche eine Spannfläche 5a auf. Außerdem sind an dem mittleren Halteglied 5 Steuerflächen 8, 9 ausgebildet, an welchen die in das Gehäuse 2 ragenden freien Enden der beiden äußeren Halteglieder 3 und 4 anliegen. Die Steuerflächen 8, 9 und die freien Enden der äußeren Halteglieder 3, 4 wirken dabei zusammen, um eine geradlinige Bewegung des mittleren Halteglieds 5 in Richtung des Werkzeugs W in eine Schwenkbewegung der äußeren Halteglieder 3, 4 umzusetzen und diese so in die in Figur 1 dargestellte Spannstellung zu bringen.

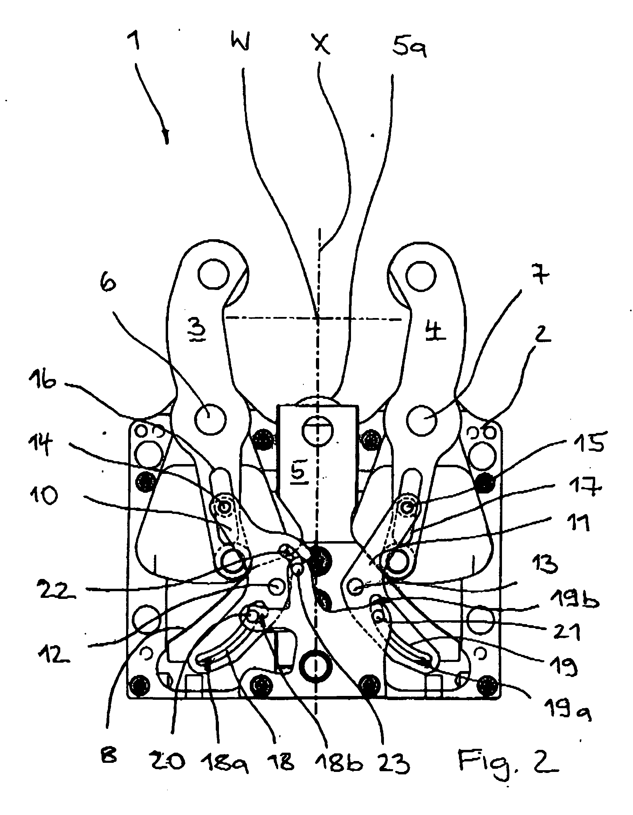

Bei der erfindungsgemäßen Lünette 1 sind die äußeren Halteglieder 3, 4 mit dem mittleren Halteglied 5 zusätzlich in der weise gekoppelt, dass die äußeren Halteglieder 3, 4 automatisch in ihre in Figur 2 dargestellte geöffnete Stellung zurückgebracht werden, wenn das mittlere Halteglied 5 aus seiner Spannstellung (Fig. 1) von dem Werkzeug W in der Zeichnung nach unten wegbewegt wird. Für diese Rückholung ist jedem äußeren Halteglied 3, 4 ein Winkelhebel 10, 11 zugeordnet, der an dem mittleren Halteglied 5 nahe von dessen Steuerflächen 8, 9 schwenkbar über einen Gelenkbolzen 12, 13 gelagert ist. Das eine Ende eines jeden Winkelhebels 10, 11 ist mit einem Zapfen 14, 15 versehen, der in eine geradlinige Kulisse 16, 17, welche in dem in das Gehäuse 2 ragenden inneren Hebel des zugehörigen äußeren Halteglieds 4, 5 ausgebildet ist, eingreift und darin geführt ist. Der andere Schenkel jedes Winkelhebels 10, 11 ist an dem Gehäuse 2 über eine Kulissen-Zapfen-Anordnung geführt. Konkret ist in dem Schenkel eine kurvenförmige Kulisse 18, 19 ausgebildet, in welcher ein am Gehäuse 2 gehaltener Zapfen 20, 21 geführt ist. Wie in der Zeichnung gut erkennbar ist, ist der Zapfen 20, 21 in der Nähe der Längsachse X der Lünette 1 vorgesehen. Die Kulissen 18, 19 der beiden Winkelhebel 10, 11 sind derart ausgebildet, dass die äußeren Halteglieder 3, 4 auch bei einer Rückführung des mittleren Halteglieds 5 an dessen Steuerflächen 8, 9 zwangsläufig anliegen. Konkret werden bei einem Zurückziehen des mittleren Halteglieds 5 auch die daran vorgesehenen Gelenkzapfen 12, 13 sowie die damit verbundenen Winkelhebel 10, 11 axial bewegt. Diese Axialbewegung wird über die Kulissen-Zapfen-Anordnung zwischen dem Winkelhebel 10, 11 und dem Gehäuse 2 in eine zusätzliche Schwenkbewegung des Winkelhebels 10, 11 gegenüber dem mittleren Halteglied 5 umgesetzt. Durch die in die geradlinigen Kulissen 16, 17 eingreifenden Zapfen 14, 15 werden dabei die äußeren Halteglieder 3, 4 zwangsläufig in der weise mitgenommen, dass ihre innen liegenden Enden auch bei der Rückführung des mittleren Haltegliedes 5 an dessen Steuerflächen 8, 9 anliegen und die Lünette 1 in der in Figur 2 gezeigten Stellung des mittleren Halteglieds 5 geöffnet ist.

Bei der dargestellten Lünette ist vorgesehen, dass die beiden äußeren Halteglieder 3, 4 über ihre in Figur 2 dargestellte geöffnete Stellung weiter hinaus aufgeschwenkt werden können. Dabei ist vorgesehen, dass das in der Zeichnung linke äußere Halteglied 3 in seiner Endstellung weiter aufgeschwenkt ist als das rechte äußere Halteglied 4. Um dies zu realisieren schließt sich an einen ersten Abschnitt 18a, 19a der beiden Kulissen 18, 19, welcher die Bewegung zwischen der Spannstellung und der geöffneten Stellung steuert, jeweils ein zweiter Kulissenabschnitt 18b, 19b an, der bei den Kulissen 18, 19 der beiden Winkelhebel 10, 11 unterschiedlich ausgestaltet ist. Bei der Kulisse 19 des dem rechten äußeren Halteglieds 4 zugeordneten Winkelhebels 11 ist der zweite Kulissenabschnitt 19b so ausgestaltet, dass das zugehörige rechte äußere Halteglied 4 aus der in Figur 2 gezeigten geöffneten Stellung in seine in Figur 3 gezeigte Endstellung zwangsgesteuert aufgeschwenkt wird, wenn das mittlere Halteglied 5 aus seiner geöffneten Stellung weiter zurückgezogen wird. Demgegenüber ist der zweite Kulissenabschnitt 18b in dem anderen winkelhebel 10 als Aufnahmetasche ausgebildet, die so ausgestaltet ist, dass der in die Kulisse 18 eingreifende Zapfen 20 an dem Gehäuse 2 keine weitere Führung erfährt und sich der Winkelhebel 10 daher frei bewegen kann. Zusätzlich ist der linke Winkelhebel 10 an dem Gehäuse 2 durch eine zweite Kulissen-Zapfen-Anordnung mit einer im Winkelhebel 10 vorgesehenen Kulisse 22 und einem darin geführten und am Gehäuse 2 gehaltenen Zapfen 23 geführt.

## Patentansprüche

1. Lünette zum Aufspannen und/oder zur Halterung eines Werkstückes (W) an einer Werkzeugmaschine mit drei in einem Gehäuse (2) gelagerten und in einer gemeinsamen Ebene verstellbaren Haltegliedern (3, 4, 5), von denen die beiden äußeren Halteglieder (3, 4) als spiegelbildlich zueinander angeordnete und schwenkbar in dem Gehäuse (2) abgestützte zweiarmige Hebel ausgebildet sind und das mittlere Halteglied (5) geradlinig und radial zu einer Werkzeugachse verschiebbar geführt ist, wobei das mittlere Halteglied (5) Steuerflächen (8, 9) aufweist, welche mit den freien Enden der äußeren Halteglieder (3, 4) zusammen wirken, um eine zur Werkzeugachse (W) gerichtete Schließbewegung des mittleren Halteglieds (5) in eine Schwenkbewegung der äußeren Halteglieder (3, 4) in deren Spannstellung umzusetzen, und wobei die beiden äußeren Halteglieder (3, 4) mit dem mittleren Halteglied (5) jeweils über einen winkelhebel (10, 11) derart kinematisch verbunden sind, dass die äußeren Halteglieder (3, 4) bei einer vom Werkstück weg gerichteten Öffnungsbewegung des mittleren Haltegliedes (5) in ihre geöffnete Stellung auseinander geschwenkt werden, **dadurch gekennzeichnet, dass** die winkelhebel (10, 11) an dem mittleren Halteglied (5) drehbar angelenkt sind und jeweils der eine Schenkel der winkelhebel (10, 11) mit dem zugehörigen äußeren Halteglied (3, 4) und der andere Schenkel mit dem Gehäuse (2) über Kulissen-Zapfen-Anordnungen verbunden sind.

2. Lünette nach Anspruch 1, **dadurch gekennzeichnet, dass** die Winkelhebel (10, 11) jeweils am Schnittpunkt ihrer beiden Schenkel an dem mittleren Halteglied (5) drehbar angelenkt sind.

3. Lünette nach Anspruch 1 oder 2, **dadurch gekennzeichnet, dass** an den inneren Hebelarmen der äußeren Halteglieder (3, 4) jeweils eine insbesondere geradlinige Kulisse vorgesehen (16, 17) ist, in welcher ein Zapfen (14, 15) am Ende des einen Schenkels des zugehörigen Winkelhebels (10, 11) verschiebbar geführt ist.

4. Lünette nach einem der vorherigen Ansprüche, **dadurch gekennzeichnet, dass** die Kulissen (18, 19) der Kulissen-Zapfen-Anordnungen zwischen Gehäuse (2) und Winkelhebel (10, 11) kurvenförmig ausgebildet sind.

5. Lünette nach Anspruch 4, **dadurch gekennzeichnet, dass** jeweils in dem mit dem Gehäuse (2) in Eingriff stehenden Schenkel der Winkelhebel (10, 11) die kurvenförmige Kulisse (18, 19) ausgebildet ist, in welcher ein am Gehäuse (2) vorgesehener Zapfen (20, 21) geführt ist.

6. Lünette nach Anspruch 5, **dadurch gekennzeichnet, dass** der Zapfen (20, 21) nahe der Bewegungsachse des mittleren Halteglieds (5) an dem Gehäuse (2) vorgesehen ist.

7. Lünette nach Anspruch 6, **dadurch gekennzeichnet, dass** der Zapfen (20, 21) in der geschlossenen Stellung der Lünette (1) mit dem am freien Ende des zugehörigen Winkelhebels (10, 11) gelegenen Ende der kurvenförmigen Kulisse (18, 19) in Eingriff steht.

8. Lünette nach einem der Ansprüche 4 bis 7, **dadurch gekennzeichnet, dass** die kurvenförmigen Kulissen (18, 19) jeweils einen ersten Abschnitt (18a, 19a) aufweisen, welcher einem Bewegungsweg der äußeren Halteglieder (3, 4) zwischen deren geöffneter Stellung und deren Schließstellung entspricht, und dass sich an das der geöffneten Stellung der Lünette (1) entsprechende Ende der ersten Abschnitte (18a, 19a) jeweils ein zweiter Abschnitt (18b, 19b) anschließt, der einem weiteren Bewegungsweg der äußeren Halteglieder (3, 4) zwischen deren geöffneter Stellung und einer Endstellung entspricht, wobei der zweite Abschnitt (19b) der Kulisse (19) zur Führung des ersten Winkelhebels (11) derart ausgebildet ist, dass eine Axialbewegung des mittleren Halteglieds (5) über seine der Öffnungsstellung der Lünette (1) entsprechende Stellung hinaus eine zwangsgesteuerte Schwenkbewegung des zugehörigen äußeren Halteglieds (4) in seine Endstellung mit sich bringt, und der zweite Abschnitt (18b) der Kulisse (18) zur Führung des zweiten Winkelhebels (10) eine Aufnahmetasche bildet, die eine freie Beweglichkeit des zweiten Winkelhebels (10) ermöglicht, und das Gehäuse (2) und der zweite Winkelhebel (10) durch eine weitere Kulissen-Zapfen-Anordnung derart miteinander verbunden sind, dass das mit dem zweiten Winkelhebel (10) verbundene äußere Halteglied (3) über seine geöffnete Stellung hinaus zwangsgesteuert aufgeschwenkt wird, wenn das mittlere Halteglied (5) über seine der Öffnungsstellung der Lünette (1) entsprechenden Stellung hinaus axial von dem Werkzeug (W) wegbewegt wird, und wobei das mit dem zweiten Winkelhebel (10) verbundene äußere Halteglied (3) in seiner Endstellung weiter aufgeschwenkt ist als das andere äußere Halteglied (4).

## Claims

1. A steady rest for clamping and/or for holding a workpiece (W) on a machine tool, comprising three holding members (3, 4, 5) mounted in a housing (2) and displaceable in a common plane, of which the two outer holding members (3, 4) are designed as two-armed levers disposed in a mirror image to one another and supported pivotably within the housing (2), and the central holding member (5) is guided moveably radially in a straight line to a tool axis, the central holding member (5) having control surfaces (8, 9) which interact with the free ends of the outer holding members (3, 4) in order to convert a closing movement of the central holding member (5) directed towards the tool axis (W) into a pivot movement of the outer holding members (3, 4) in the clamping position of the latter, and the two outer holding members (3, 4) being kinematically connected respectively to the central holding member (5) via an angle lever (10, 11) so that with an opening movement of the central holding member (5) directed away from the workpiece the outer holding members (3, 4) are pivoted apart from one another into their open position, **characterised in that** the angle levers (10, 11) are linked rotatably to the central holding member (5) and respectively the one leg of the angle levers (10, 11) is connected to the associated outer holding member (3, 4), and the other leg is connected to the housing (2) by means of gate/pin arrangements.

2. The steady rest according to Claim 1, **characterised in that** the angle levers (10, 11) are respectively linked to the central holding member (5) at the intersection point of their two legs.

3. The steady rest according to Claim 1 or 2, **characterised in that** on the inner lever arms of the outer holding members (3, 4) a gate (16, 17), in particular a straight gate, is respectively provided in which a pin (14, 15) is moveably guided on the end of the one leg of the associated angle lever (10, 11).

4. The steady rest according to any of the preceding claims, **characterised in that** the gates (18, 19) of the gate/pin arrangements are curved in design between the housing (2) and the angle lever (10, 11).

5. The steady rest according to Claim 4, **characterised in that** the curved gate (18, 19) is respectively formed in the leg of the angle levers (10, 11) engaging with the housing (2), in which curved gate a pin (20, 21) provided on the housing (2) is guided.

6. The steady rest according to Claim 5, **characterised in that** the pin (20, 21) is provided on the housing (2) close to the axis of movement of the central holding member (5).

7. The steady rest according to Claim 6, **characterised in that** in the closed position of the steady rest (1) the pin (20, 21) engages with the end of the curved gate (18, 19) positioned on the free end of the associated angle lever (10, 11).

8. The steady rest according to any of Claims 4 to 7, **characterised in that** the curved gates (18, 19) respectively have a first section (18a, 19a) which corresponds to a path of movement of the outer holding members (3, 4) between the open position of the latter and the closed position of the latter, and that adjoining the end of the first sections (18a, 19a) corresponding to the open position of the steady rest (1) there is respectively a second section (18b, 19b) which corresponds to a further path of movement of the outer holding members (3, 4) between the open position of the latter and an end position, the second section (19b) of the gate (19) being designed to guide the first angle lever (11) such that an axial movement of the central holding member (5) beyond its position corresponding to the open position of the steady rest (1) is associated with a force-controlled pivot movement of the associated outer holding member (4) into its end position, and the second section (18b) of the gate (18) for guiding the second angle lever (10) forms a receiving pocket which enables free moveability of the second angle lever (10), and the housing (2) and the second angle lever (10) are connected to one another by a further gate/pin arrangement such that the outer holding member (3) connected to the second angle lever (10) is pivoted out, force-controlled, beyond its open position when the central holding member (5) is moved away axially from the tool (W) beyond its position corresponding to the open position of the steady rest (1), and the outer holding member (3) connected to the second angle lever (10) being pivoted out further in its end position than the other outer holding member (4).

## Revendications

1. Lunettes pour serrer et/ou tenir une pièce d'oeuvre (W) sur une machine-outil, avec trois maillons de maintien (3, 4, 5) montés dans un boîtier (2) et déplaçables dans un plan commun, dont les deux maillons de maintien extérieurs (3, 4) sont formés de leviers à deux bras arrangés réfléchissement l'un compare à l'autre et fixés au boîtier (2) à l'aide d'un pivot, et le maillon de maintien central (5) est guidé de façon rectiligne et radiale à un axe de rotation, cependant que le maillon de maintien central (5) présente des gouvernes (8, 9) qui coopèrent avec les extrémités libres des maillons de maintien extérieurs (3, 4) pour déplacer une course de fermeture du maillon de maintien central (5) dirigée vers l'axe de rotation (W) dans un mouvement pivotant des maillons de maintien extérieurs (3, 4) dans leur position de serrage et cependant que les deux maillons de maintien extérieurs (3, 4) sont respectivement liés cinématiquement avec le maillon de maintien central (5) par un levier coudé (10, 11) où les maillons de maintien extérieurs (3, 4) sont pivotés entre eux dans leur position ouverte lors d'un mouvement d'ouverture dirigé partant de la pièce d'oeuvre, **caractérisé en ce que** les leviers coudés (10, 11) sont articulés de façon réglable au maillon de maintien central et une branche du levier coudé (10, 11) est connectée au maillon de maintien extérieur correspondant (3, 4) et l'autre branche est connectée au boîtier (2) par des structures de tourillons-coulisses.

2. Lunette selon la revendication 1, **caractérisée en ce que** les leviers coudés (10, 11) sont respectivement articulés de façon rotative au point d'intersection de leurs deux branches au maillon de maintien central (5).

3. Lunettes selon la revendication 1 ou 2, **caractérisée en ce qu'**il est prévu à chaque bras de levier intérieur du maillon de maintien extérieur (3, 4) une coulisse particulièrement rectiligne, dans lequel un tourillon (14, 15) est guidé de façon mobile au levier coudé correspondant.

4. Lunettes selon l'une des revendications précédentes, **caractérisée en ce que** les coulisses (18, 19) des structures de tourillon de coulisses entre le boîtier (2) et les leviers coudés ont une forme courbe.

5. Lunettes selon la revendication 4, **caractérisée en ce que** la coulisse de forme courbe (18, 19) est formée respectivement dans la branche du levier coudé (10, 11) se tenant dans l'empiétement avec le boîtier (2), dans lequel un tourillon prévu (20, 21) est guidé vers le boîtier.

6. Lunette selon la revendication 5, **caractérisée en ce que** le tourillon (20, 21) est prévu à proximité de l'axe du mouvement du maillon de maintien central (5) du boîtier (2).

7. Lunette selon la revendication 6, **caractérisée en ce que** le tourillon (20, 21) dans la position fermée de la lunette (1) se tient dans l'empiétement avec l'extrémité de la coulisse de forme courbe (18, 19) située à l'extrémité libre du levier coudé correspondant.

8. Lunette selon l'un des revendications 4 à 7, **caractérisée en ce que** les coulisses de forme courbe (18, 19) présentent respectivement une première section (18a, 19a) qui correspond à un segment parcouru des maillons de maintien extérieur (3, 4) entre leur position ouverte et leur position fermée et **en ce qu'**une deuxième section (18b, 19b) se rattache à l'extrémité correspondante des premières sections (18a, 19a)de la position ouverte de la lunette (1) qui correspond à un autre segment parcouru du maillon de maintien extérieur (3, 4) entre leur position ouverte et leur position finale, cependant que la deuxième section (19 b) de la coulisse (19) est conçu de la sorte à conduire le premier levier coudé (11), **en ce qu'**un mouvement axial du maillon de maintien central (5) prenne avec lui dans sa position finale un mouvement pivotant sous pilotage forcé sur sa position d'ouverture de la lunette (1) du maillon de maintien extérieur correspondant (4), qui permet une flexibilité en toute liberté du deuxième levier coudé (10) et qui relie ensemble le boîtier (2) au deuxième levier coudé (10) grâce à une autre structure de tourillon de coulisses, **en ce que** le levier coudé extérieur connexe (3) est articulé avec le deuxième levier coudé (10) dans sa position ouverte, si le maillon de maintien central (5) est éloigné de façon axiale de l'outil (W) sur sa position correspondant à la position d'ouverture de la lunette, et cependant que le maillon de maintien extérieur (3) relié au deuxième bras de levier (10) est davantage pivoté vers l'intérieur dans sa position finale que l'autre bras de levier extérieur (4).
